# FASCICULE DE BREVET EUROPEEN

(11) **EP 3 414 134 B1**
(45) Date de publication et mention de la délivrance du brevet: **23.06.2021**
(21) Numéro de dépôt: 17704701.6
(22) Date de dépôt: 07.02.2017
(51) Int. Cl.: B60S 1/48

(54) **SYSTÈME ET PROCÉDÉ DE PILOTAGE D'UN DISPOSITIF DE NETTOYAGE D'UNE VITRE D'UN VÉHICULE**
SYSTEM UND VERFAHREN ZUR STEUERUNG EINER VORRICHTUNG ZUR REINIGUNG EINER FENSTERSCHEIBE EINES FAHRZEUGS
SYSTEM AND METHOD FOR CONTROLLING A DEVICE FOR CLEANING A WINDOW OF A VEHICLE

(30) Priorité: 11.02.2016 FR 1651091
(43) Date de publication de la demande: 19.12.2018
(73) Titulaire: Valeo Systèmes d'Essuyage, 78322 Le Mesnil Saint Denis (FR)
(72) Inventeur: GIRAUD, Frédéric, 78322 LE MENSIL SAINT DENIS CEDEX (FR); THEBAULT, Denis, 78322 LE MENSIL SAINT DENIS CEDEX (FR)
(74) Mandataire: Valeo Visibility
(86) Numéro de dépôt international: PCT/EP2017/052650
(87) Numéro de publication internationale: WO 2017/137397

(56) Documents cités:
- DE-A1-102009 040 993
- DE-A1-102011 116 618
- JP-A- 2006 347 297
- US-A1- 2014 217 194

## Description

### DOMAINE TECHNIQUE

Le secteur technique de la présente invention est celui des procédés de dégivrage et/ou de nettoyage d'une vitre d'un véhicule, notamment automobile, et des dispositifs correspondants utilisant des balais d'essuyage et des moyens de projection de liquide.

### ETAT DE L'ART

Les automobiles sont couramment équipées de systèmes d'essuyage et de lavage de vitres pour assurer un essuyage et un lavage des vitres et éviter ainsi que la vision qu'a le conducteur de son environnement ne soit perturbée. Une telle installation comprend généralement deux balais d'essuyage qui raclent la surface extérieure de la vitre, telle que le pare-brise, de manière à évacuer l'eau présente sur cette surface. Des gicleurs sont positionnés au niveau du capot du véhicule ou, dans une version plus récente, sur les balais, et sont alimentés en liquide lave-glace par l'intermédiaire d'une pompe et d'un système de canalisation reliés à un réservoir de liquide lave-glace.

Certaines automobiles sont équipées de systèmes de dégivrage. Un système de dégivrage comprend en général un système d'essuyage et de lavage classique du type précité, et comprend en plus un réservoir de liquide de dégivrage voire une pompe supplémentaire. Dans le but de dégivrer une vitre par temps froid, les gicleurs sont alimentés en liquide de dégivrage par l'intermédiaire de la pompe et du système de canalisation reliés au réservoir de liquide de dégivrage.

Ce dispositif peut être également utilisé, avec le même type de liquide ou un liquide différent, pour décoller les salissures causées par l'écrasement des moustiques ou autres insectes contre le pare-brise. Le liquide est alors utilisé pour dissoudre et /ou décoller ces salissures avant que le balai ne racle le pare-brise pour les évacuer.

La Demanderesse a déjà proposé des systèmes et des dispositifs de dégivrage, décrits notamment dans le document FR-A1-2 789 034, qui utilisent des moteurs commandés électroniquement, par exemple fonctionnant en pas à pas, capables d'effectuer un balayage du pare-brise par secteurs angulaires successifs, avec des arrêts et en modulant la vitesse de balayage.

Avec l'utilisation de cette technologie, il est possible de définir des programmes de dégivrage dans lesquels, notamment, la montée des balais sur la vitre s'effectue en une série de pas angulaires successifs avec projection de liquide de dégivrage, laissant le temps au liquide d'agir pour assurer une excellente reprise de visibilité pour des températures extérieures descendant au moins jusqu'à -20°C.

Cependant, tant pour la fonction dégivrage que pour la fonction de nettoyage d'insectes, la mise en œuvre de tels programmes accroît la consommation d'un liquide relativement onéreux, plus cher qu'un liquide de nettoyage normal. Il faut donc éviter d'utiliser cette fonction lorsque ce n'est pas nécessaire, en particulier lorsqu'il n'y a pas de givre ou de salissure, ou que le peu qui est déposé peut être éliminé par un cycle de nettoyage avec un liquide normal. De plus, si les conditions sont très sévères, trop de givre par exemple, le dispositif sera inefficace et l'on dépensera du liquide en pure perte.

Il existe donc un besoin de contrôler l'utilité du lancement du procédé de dégivrage et/ou de de nettoyage d'insectes, de manière à ne le lancer que lorsque c'est utile. Le problème a été exposé en prenant pour exemple un dispositif utilisant un liquide spécial pour le dégivrage. Cependant, le besoin existe aussi pour un dispositif utilisant d'autres moyens pour dégivrer, par exemple des moyens de chauffage électrique. Dans ce cas, il s'agit aussi d'économiser des ressources qui sont utilisées par la fonction de dégivrage.

Le document JP2006347297 A2 décrit le préambule de la première revendication.

L'invention apporte une solution à ce besoin, adaptée à tous les véhicules ayant un dispositif de nettoyage des vitres comportant une fonction de dégivrage et/ou de nettoyage d'insectes.

### EXPOSE DE L'INVENTION

A cet effet, l'invention concerne un système de pilotage d'un dispositif de nettoyage d'une vitre de véhicule, ledit dispositif étant agencé pour effectuer une première fonction de nettoyage, adaptée par exemple à un nettoyage standard de poussière, et au moins une deuxième fonction de nettoyage, visant à débarrasser la vitre d'une matière déterminée, notamment du givre de la neige ou des insectes, adhérant à la surface extérieure de ladite vitre, comprenant au moins un capteur agencé pour fournir une information de présence de ladite matière sur au moins une de la surface extérieure de la vitre et un premier moyen électronique agencé pour transmettre des commandes d'exécution des fonctions du dispositif de nettoyage et communiquer avec ce dernier, le système étant agencé pour que le premier moyen électronique transmette une première commande d'exécution de la deuxième fonction en effectuant, avec les données dudit au moins un capteur, une identification de la présence ou de l'absence de ladite matière et en n'activant pas la deuxième fonction s'il identifie l'absence de ladite matière, le système étant caractérisé en ce qu'il est agencé pour que, le premier moyen électronique, après avoir identifié la présence de ladite matière, vérifie, avec les données dudit au moins un capteur, que la quantité de ladite matière présente sur la surface extérieure de la vitre n'est pas trop importante pour l'exécution de la deuxième fonction par le dispositif de nettoyage, et n'active pas la deuxième fonction si la quantité de ladite matière est supérieure à une valeur seuil prédéterminée.

L'utilisateur peut actionner la deuxième fonction à distance et donc, ne voyant pas l'état de la vitre, demander son exécution alors que c'est inutile. En particulier, si la deuxième fonction utilise des ressources particulières, telles qu'un liquide spécial, celles-ci seront dépensées inutilement. Grâce à l'invention, en exploitant l'information de présence de la matière adhérant sur la vitre pour bloquer l'exécution de la deuxième fonction, le système de pilotage permet d'éviter une activation intempestive de la deuxième fonction et d'économiser les ressources particulières qu'elle utilise.

Avantageusement, le système comprend en outre un deuxième moyen électronique connecté au premier moyen électronique et agencé pour communiquer avec un terminal portable, de manière à recevoir des commandes d'un utilisateur situé à distance du véhicule, et à transmettre des informations audit utilisateur.

De préférence, le système est agencé pour transmettre au terminal portable un message informant de l'absence de ladite matière lorsque le premier moyen électronique a identifié l'absence de ladite matière.

Avantageusement, le système est agencé pour activer la deuxième fonction lorsqu'il reçoit une deuxième commande d'exécution, venant notamment de l'utilisateur, après avoir envoyé le message informant de l'absence de ladite matière. L'utilisateur peut ainsi reprendre la main et faire exécuter quand même la deuxième fonction s'il est convaincu de son utilité.

Ledit au moins un capteur peut être une caméra placée à l'intérieur du véhicule, dont le champ de vision traverse au moins une partie de la vitre.

Selon l'invention, le système est en outre agencé pour que le premier moyen électronique, après avoir identifié la présence de ladite matière, vérifie, avec les données dudit moins un capteur, que la quantité de ladite matière présente sur la surface extérieure de la vitre n'est pas trop importante pour l'exécution de la deuxième fonction par le dispositif de nettoyage et n'active pas la deuxième fonction si la quantité de ladite matière est supérieure à une valeur seuil prédéterminée. De cette manière, le système de pilotage permet d'éviter d'utiliser les ressources mises en œuvre par la deuxième fonction si le dispositif n'est pas capable d'éliminer correctement ladite matière. Cela peut permettre aussi de préserver le dispositif de nettoyage si, par exemple, il y a trop de givre pour décoller les balais.

Avantageusement, ledit au moins un capteur et le premier moyen électronique sont agencés pour fournir une évaluation quantitative de ladite matière déposée sur la surface extérieure de la vitre.

Lorsque ladite matière est du givre ou de la neige, ledit au moins un capteur et le premier moyen électronique peuvent être agencés pour évaluer une estimation de l'épaisseur de givre ou de neige, par exemple en effectuant une mesure d'opacité au travers de la vitre.

Dans ce cas, le système peut être agencé pour piloter le dispositif de nettoyage en utilisant l'estimation de l'épaisseur de givre ou de neige pour adapter des paramètres de fonctionnement de la deuxième fonction. Les paramètres de fonctionnement peuvent notamment inclure un pilotage adapté du déplacement des balais d'essuyage et/ou de la stratégie de projection de liquide.

L'invention concerne aussi un ensemble comportant un système tel qu'il a été décrit, et un dispositif de nettoyage d'une vitre de véhicule agencé pour effectuer une première fonction de nettoyage, adaptée par exemple à un nettoyage standard de poussière, et au moins une deuxième fonction de nettoyage, visant à débarrasser la vitre d'une matière déterminée, notamment du givre de la neige ou des insectes, adhérant à la surface extérieure de ladite vitre.

Le dispositif de nettoyage peut comprendre des moyens spécifiques, utilisant par exemple un liquide, agencés pour être activés par la deuxième fonction et ne pas être activés par la première fonction.

L'invention concerne aussi un procédé de pilotage d'un dispositif de nettoyage d'une vitre de véhicule, ledit dispositif étant agencé pour effectuer une première fonction de nettoyage, adaptée par exemple à un nettoyage standard de poussière, et au moins une deuxième fonction de nettoyage, visant à débarrasser la vitre d'une matière déterminée, notamment du givre de la neige ou des insectes, adhérant à la surface extérieure de ladite vitre, caractérisé en ce qu'il comprend, après une première commande envoyée par un utilisateur pour exécuter ladite deuxième fonction:
- une première étape, d'acquisition, comprenant au moins une prise d'information de présence de ladite matière sur au moins une partie de la surface extérieure de la vitre ;
- une deuxième étape, de contrôle, dans laquelle l'information de la première étape est utilisée pour identifier la présence ou l'absence de ladite matière sur la surface extérieure de la vitre et dont un résultat est de ne pas activer la deuxième fonction si l'absence de ladite matière est identifiée.

Avantageusement, le procédé comprend, en outre, une troisième étape dans laquelle l'information de l'absence de ladite matière est communiquée à l'utilisateur lorsque la deuxième fonction n'est pas activée à la fin de la deuxième étape, et dans laquelle la deuxième fonction est lancée si une deuxième commande est envoyée par l'utilisateur pour exécuter ladite deuxième fonction.

Le procédé comprend selon l'invention, à la suite de la deuxième étape, lorsque la présence de ladite matière a été identifiée, une quatrième étape dans laquelle une analyse complémentaire de la quantité de matière présente sur la surface extérieure de la vitre, pour déterminer si la quantité de ladite matière présente sur la surface extérieure de la vitre n'est pas trop importante pour l'exécution de la deuxième fonction par le dispositif de nettoyage et qui n'active pas la deuxième fonction si la quantité de ladite matière est supérieure à une valeur seuil prédéterminée.

La quatrième étape peut fournir une estimation de la quantité de ladite matière et le procédé peut comprendre une cinquième étape dans laquelle cette information est communiquée à l'utilisateur.

### DESCRIPTION DES FIGURES

D'autres caractéristiques et avantages de l'invention apparaîtront à la lecture de la description qui suit et d'exemples de réalisation donnés à titre illustratif en référence aux figures annexées. Sur ces figures :
- la figure 1 est une vue schématique d'un dispositif de nettoyage d'une vitre, ici de véhicule automobile ;
- la figure 2 est une vue schématique d'un ensemble comprenant un système de pilotage selon l'invention et le dispositif de nettoyage de la figure 1 ; et
- la figure 3 est un diagramme illustrant les étapes d'un procédé de pilotage selon l'invention du dispositif de nettoyage de la figure 1.

### DESCRIPTION DETAILLEE

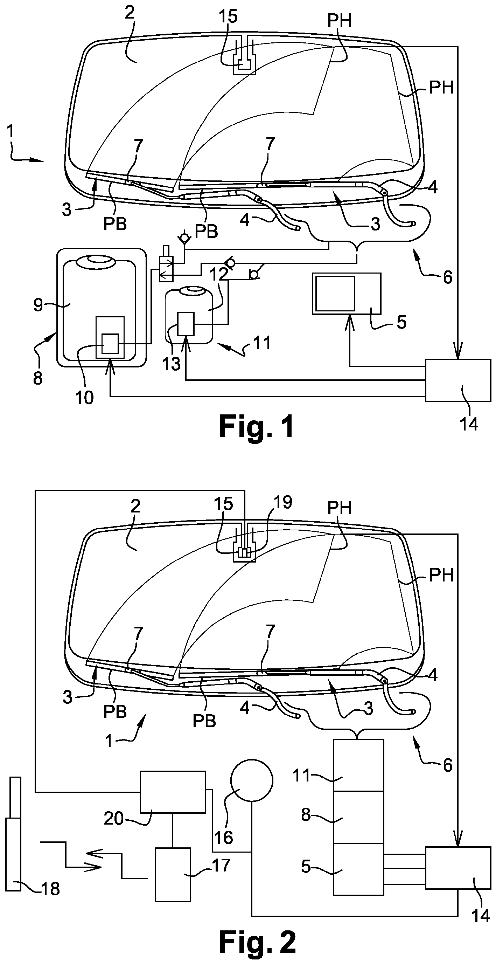

L'invention concerne le pilotage d'un dispositif de nettoyage 1 appliqué par exemple sur une vitre d'un véhicule automobile, telle qu'un pare-brise 2, comme illustré à la figure 1.

Le dispositif de nettoyage 1 comprend au moins un balai d'essuyage 3 monté sur un bras 4 et apte à se déplacer sur le pare-brise 2 entre une position basse PB et une position haute PH, et inversement. Dans l'exemple représenté, le dispositif 1 comprend deux balais d'essuyage 3. Le dispositif de nettoyage 1 comprend également un moteur 5 destiné à entraîner les balais d'essuyage ntre leurs positions basses PB et leurs positions hautes PH respectives.

Le dispositif de nettoyage 1 comprend également un ensemble de moyens de projection de liquide sur le pare-brise. Sur cet exemple, un système de canalisation 6 est relié à des gicleurs 7 destinés à projeter du liquide sur le pare-brise. Les gicleurs 7 sont, ici, situés tout le long des balais d'essuyage 3. Ils sont disposés de manière à projeter du liquide vers le haut des balais d'essuyage 3, c'est-à-dire vers le haut du pare-brise 2. Il est également possible que des gicleurs 7 situés des deux côtés des balais d'essuyage 3 projettent simultanément le liquide de chaque côté d'avancement. Le système pourrait aussi bien être mis en œuvre à l'aide d'au moins un gicleur situé disposé au niveau d'une extrémité longitudinale du balai d'essuyage, la projection de liquide s'effectuant alors soit uniquement dans le sens de la montée, soit uniquement du côté d'avancement du balai.

Le système de canalisation 6 est alimenté en liquide à projeter sur le pare-brise 2 par deux circuits amont distincts suivant la fonction demandée au dispositif de nettoyage 1.

Pour une fonction de lavage normale, le premier circuit 8 comporte un premier réservoir 9 contenant un liquide de lavage et une première pompe 10 destinée à faire circuler le liquide de lavage dans le système de canalisation 6.

Pour une fonction de dégivrage, le deuxième circuit 11 comporte un deuxième réservoir 12 contenant un liquide de dégivrage et une deuxième pompe 13 destinée à faire circuler le liquide de dégivrage dans le système de canalisation 6. Cette fonction dégivrage est généralement utilisée pour enlever soit du givre, soit de la neige déposée sur le pare-brise.

De préférence, le dispositif de nettoyage 1 est agencé pour pouvoir également nettoyer des insectes collés sur le pare-brise 2. Avantageusement, le deuxième réservoir 12 se présente sous la forme d'une cartouche amovible. Il est alors possible, en changeant de cartouche par exemple, de remplacer le liquide de dégivrage par un liquide adapté au nettoyage des insectes, par exemple un détergent spécifique. Ainsi, on peut, suivant la saison par exemple, adapter le dispositif de nettoyage soit à la fonction dégivrage soit à la fonction nettoyage des insectes.

Les fonctions de dégivrage et de nettoyage d'insectes ont la particularité, par rapport à la fonction de lavage normale, de débarrasser le pare-brise d'une matière adhérente au pare-brise, pour laquelle le liquide utilisé pour la fonction de lavage normale n'est pas adaptée.

Le dispositif de nettoyage 1 décrit utilise un liquide particulier pour faire fondre le givre et/ou la neige en vue de les décoller de la vitre 2. Un autre type de dispositif de nettoyage peut utiliser des moyens chauffants pour faire fondre le givre et/ou la neige. Dans ce cas, la fonction dégivrage utilise des ressources supplémentaires en énergie électrique du véhicule pour activer les moyens de chauffage.

Le dispositif de nettoyage 1 comprend de plus un boîtier électronique 14 capable de commander le moteur 5 d'entraînement des balais d'essuyage 3 et l'activation des pompes 10, 13 des deux circuits 8, 11 d'alimentation en liquide pour faire exécuter au dispositif 1 des cycles adaptés soit à la fonction de lavage normale, avec le liquide de lavage présent dans le premier réservoir 11, soit l'une des fonctions de dégivrage et/ou de nettoyage d'insectes, avec le liquide spécifique présent dans le deuxième réservoir 12. Le boîtier électronique de commande 14 peut être plus ou moins simple, suivant la complexité des opérations prévues pour remplir les différentes fonctions.

Avantageusement, le véhicule est équipé en outre d'un capteur 15 de température extérieure. Il est situé ici sur une partie haute du pare-brise, au centre de celui-ci, sans que cette position ne soit limitative. Le capteur 15 peut être directement exposé à l'air ambiant extérieur du véhicule et est destiné à mesurer la température extérieure, par exemple dans une plage de valeurs allant de -50°C à +50°C.

Dans ce cas, le boîtier de commande 14 peut être relié au capteur 15 de température et exploiter l'information de ce capteur pour adapter les paramètres des fonctions exécutées par le dispositif 1.

En référence à la figure 2, le véhicule comprend généralement des moyens de commande embarqués 16 qui permettent à un conducteur d'envoyer des ordres au boîtier de commande pour faire exécuter les différentes fonctions au dispositif de nettoyage 1. Normalement, les fonctions de dégivrage et/ou de nettoyage des insectes doivent se faire à l'arrêt du véhicule. Les moyens de commande peuvent donc comprendre des dispositifs de sécurité pour interdire ces fonctions lorsque le véhicule roule.

Ici, le véhicule est également équipé d'un module électronique de télétransmission 17 pour permettre à un utilisateur, lorsque le véhicule est stationné, de lancer à distance les fonctions de dégivrage ou de nettoyage des insectes du dispositif de nettoyage 1. Ce module électronique de télétransmission est agencé pour communiquer avec un terminal, qui est par exemple un téléphone mobile, sur lequel l'utilisateur peut envoyer des commandes et/ou lire des messages.

Selon l'invention, en référence à la figure 2, le véhicule est équipé d'un capteur 19 de l'état de surface extérieur du pare-brise 2 et d'un module électronique de pilotage 20 agencé pour exploiter les informations du capteur 19. Le module électronique de pilotage 20 peut être un boîtier spécifique ou un ordinateur de bord, selon le type de véhicule. Sur l'exemple présenté en figure 2, le module électronique de pilotage 20 est également relié au module électronique de télétransmission 17 communiquant avec le terminal portable 18. En fonction des informations récoltées, le module électronique de pilotage 20 donne des instructions au boîtier de commande 14.

Le capteur 19 et le module électronique de pilotage 20 sont agencés pour analyser l'état de surface extérieur du pare-brise 2 et en déduire une évaluation de la pertinence de l'activation des fonctions de dégivrage et/ou de nettoyage des insectes par le dispositif de nettoyage 1.

Sur l'exemple illustré, le capteur 19 est une caméra située à l'intérieur du véhicule et regardant vers l'extérieur au-travers dudit pare-brise. Cette caméra 19 est installée de manière à ne pas gêner la vision du conducteur mais aussi de manière ce que son champ traverse une portion de pare-brise représentative de l'état de surface de ce dernier. Ici, la caméra 19 est installée en haut au centre du pare-brise, en général au niveau du rétroviseur, et son champ traverse une portion de la vitre 2 balayée par au moins l'un des balais 3.

Des variantes peuvent être envisagées pour le capteur 19, ce peut être une caméra installée à l'extérieur du véhicule, voire un capteur à ultrasons sur la vitre 2. L'important est que le capteur 19 puisse fournir des informations sur la matière collée, givre ou insectes écrasés, sur la surface extérieure de la vitre 2.

Les fonctionnalités de la caméra 19 et du module électronique de pilotage 20 sont détaillées ci-après en suivant les différentes étapes effectuées avec le système de pilotage constitué du capteur 19, du module électronique de pilotage 20 et du module électronique de télétransmission 17 avant d'envoyer un ordre d'activation de la fonction de dégivrage ou de nettoyage d'insectes au dispositif de nettoyage 1.

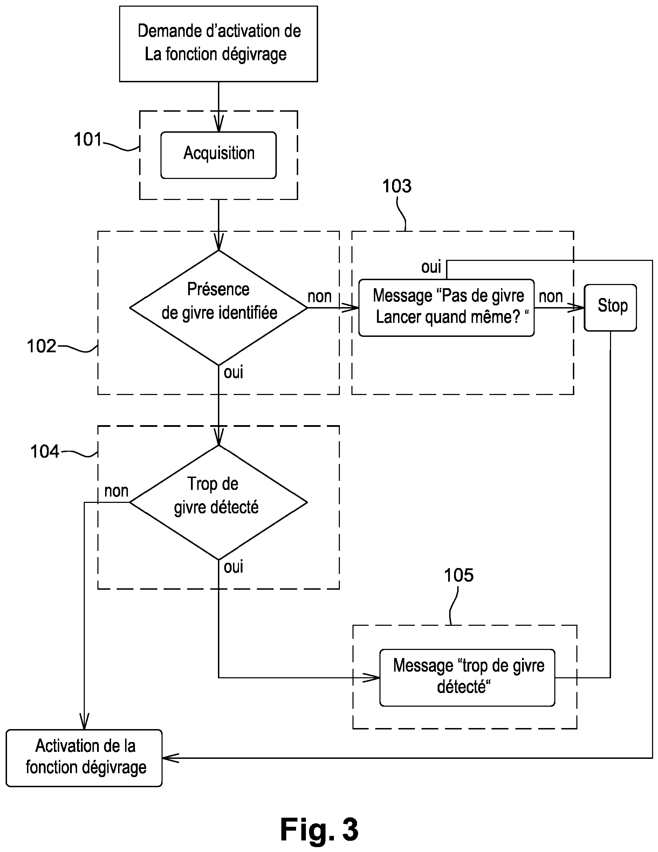

En référence au diagramme de la figure 3, le véhicule étant à l'arrêt, le processus est généralement démarré par une demande de l'utilisateur envoyée à l'aide de son téléphone mobile 18 vers le module électronique de télétransmission 17. Selon une première variante du système de commande, il peut envoyer un ordre ciblé, d'effectuer un dégivrage ou un nettoyage d'insectes, selon la période de l'année, la météo ou l'utilisation précédente du véhicule. Selon une deuxième variante, il peut envoyer un ordre plus général, du type « procéder au nettoyage », laissant au système de commande le soin de lancer la bonne fonction du dispositif de nettoyage 1. L'utilisateur peut être éloigné de son véhicule et ne pas voir l'état de la vitre 2, si bien qu'il n'est pas forcément certain que sa demande est pertinente.

Le système de pilotage démarre le processus par une première étape 101 d'acquisition d'au moins une image par la caméra 19, demandée par le module électronique de pilotage 20. A ce stade, plusieurs variantes sont possibles. Dans une première variante, la caméra 19 peut être focalisée à l'infini. Dans ce cas, elle fournit une information sur la façon dont le pare-brise transmet une vision des scènes extérieures. Dans une autre version, elle peut être focalisée sur la surface du pare-brise, dans ce cas elle fournit une information directe de l'état de surface du pare-brise. Pour la suite de l'exposé on utilisera la première variante.

Selon un premier aspect de l'invention, dans une deuxième étape 102, le module électronique de pilotage 20 exploite l'image fournie par la caméra 19 afin de déterminer ou non la présence de givre, de neige ou d'insectes sur la vitre 2. Pour cela, il peut par exemple utiliser un programme de reconnaissance de formes ou autre, selon les informations fournies par la caméra. Dans cette analyse, le module électronique de pilotage 20 peut, par exemple, discriminer la présence et l'absence de matière par un seuil donné de propreté et/ou de visibilité pour un conducteur au travers de la vitre 2.

Si, à la fin de cette deuxième étape 102, le module électronique de pilotage 20 a identifié une absence de givre, de neige, ou d'insectes, il conclut à la non pertinence de lancer un cycle de dégivrage ou de nettoyage d'insectes et il ne transmet pas la commande de lancement de cette fonction au boîtier de commande 14 du dispositif de nettoyage 1.

Dans ce cas, de préférence, le module électronique de pilotage 20 lance une troisième étape 103, de communication avec l'utilisateur. Dans cette étape, le module électronique de télétransmission 17 envoie un message indiquant qu'il n'est pas nécessaire d'exécuter la commande, par exemple, dans le cas du givre : « pas de givre ». L'information peut s'accompagner d'une requête demandant à l'utilisateur s'il veut quand même procéder au dégivrage ou au nettoyage d'insectes. Le module électronique de télétransmission 17 transmettra alors au module de pilotage l'ordre de lancer la fonction si l'utilisateur répond par l'affirmative.

A la fin de la deuxième étape 102, le module électronique de pilotage peut, à l'inverse conclure à la présence de givre ou d'insectes sur la vitre. Selon une variante, le module de pilotage 20 peut valider son analyse par des données extérieures au capteur 19, par exemple la température extérieure donnée par le capteur de température 15 ou une information sur le type de cartouche installée dans le réservoir 12 de liquide spécifique.

Si, à la fin de la deuxième étape 102, le module électronique de pilotage 20 a conclu à la pertinence d'activer la fonction de dégivrage ou de nettoyage d'insectes, selon l'invention, dans un premier mode de réalisation, il peut, selon une variante non représentée, ordonner au boîtier de commande 14 d'activer la fonction correspondante du dispositif de nettoyage 1 et, éventuellement, faire envoyer un message à l'utilisateur indiquant que la fonction est activée.

Cependant, selon un autre aspect de l'invention, illustré sur la figure 3, le module de pilotage 20 peut faire effectuer une quatrième étape 104 au système de pilotage avant d'activer la fonction de dégivrage ou de nettoyage d'insecte. L'étape est ici décrite pour piloter la fonction de dégivrage. Un processus analogue peut être envisagé dans le cas de la fonction nettoyage d'insectes.

Dans cette étape 104, le module électronique de pilotage 20 peut procéder à une analyse complémentaire des informations fournies par la caméra 19. Ici, le module électronique de pilotage 20 peut faire une analyse plus poussée de l'image obtenue lors de la première étape d'acquisition 101. Dans une variante non représentée, l'étape 104 peut être précédée par une deuxième étape d'acquisition, non représentée, dans laquelle le module électronique de pilotage 20 fait prendre d'autres mesures par la caméra 19.

Les analyses du module électronique de pilotage 20 lors de cette étape 104 sont agencées ici pour caractériser un paramètre tel que l'épaisseur de givre déposé sur la vitre 2, afin de déterminer si le dispositif de nettoyage 1 sera capable de dégivrer correctement la vitre 2. Il détermine par exemple un degré d'opacité de la vitre 2.

La conclusion du module électronique de pilotage 20 peut être binaire : il y a trop de givre pour activer la fonction de dégivrage ou il n'y en a pas trop. La conclusion peut aussi être plus quantitative : si on peut lancer un cycle de dégivrage, l'épaisseur déposée sur la surface extérieure de la vitre peut nécessiter plus ou moins de liquide de dégivrage et/ou plus ou moins de cycles de balayage dans la fonction de dégivrage.

Si, à la fin de la quatrième étape 104, le module électronique de pilotage 20 a conclu à la possibilité de lancer un cycle de dégivrage sans identifier de contrainte particulière sur la quantité de liquide de dégivrage utilisée, il peut ordonner directement au boîtier de commande 14 de lancer le cycle correspondant et, éventuellement, faire envoyer un message à l'utilisateur indiquant que le cycle a démarré.

Si, à la fin de cette quatrième étape 104, le module électronique de pilotage 20 a conclu qu'il y a trop de givre pour que la fonction de dégivrage s'effectue correctement, il maintient le dispositif de nettoyage 1 à l'arrêt et n'active pas la fonction de dégivrage. Si le module électronique de pilotage 20 a élaboré une information plus quantitative aboutissant au fait que la quantité de givre déposée sur la vitre 2 peut être correctement nettoyée sous réserve que le dispositif de nettoyage utilise une quantité de liquide supérieure à une quantité standard donnée pour la fonction de dégivrage, il maintient également de préférence le dispositif de nettoyage 1 à l'arrêt et n'active pas la fonction de dégivrage.

Avantageusement, dans les deux cas précédents, le module électronique de pilotage 20 lance une cinquième étape 105, de communication avec l'utilisateur. Dans cette étape, le module électronique de télétransmission 17 envoie un message donnant l'information élaborée par le module électronique de pilotage 20.

Dans le cas où le dégivrage est possible mais demande une grande quantité de liquide de dégivrage, l'utilisateur peut quand même décider de procéder au dégivrage. Le module électronique de télétransmission 17 transmet alors l'ordre d'activer la fonction de dégivrage au module électronique de pilotage 20. Dans une variante non représentée, le module électronique de pilotage 20 peut envoyer au boîtier de commande 14 des ordres pour adapter certains paramètres de la fonction de dégivrage, comme par exemple la quantité de liquide utilisée.

Les opérations effectuées par le système de pilotage ont été décrites principalement pour la fonction de dégivrage. L'homme du métier pourra aisément adapter ces opérations au cas où la matière adhérant à la vitre 2 correspond à des insectes pour piloter la fonction de nettoyage correspondante.

## Revendications

1. Système de pilotage d'un dispositif (1) de nettoyage d'une vitre (2) de véhicule, ledit dispositif (1) étant agencé pour effectuer une première fonction de nettoyage, adaptée par exemple à un nettoyage standard de poussière, et au moins une deuxième fonction de nettoyage, visant à débarrasser la vitre (2) d'une matière déterminée, notamment du givre, de la neige ou des insectes, adhérant à la surface extérieure de ladite vitre, comprenant au moins un capteur (19) agencé pour fournir une information de présence de ladite matière sur au moins une partie de la surface extérieure de la vitre (2) et un premier moyen électronique (20) agencé pour transmettre des commandes d'exécution des fonctions du dispositif de nettoyage (1) et communiquer avec ce dernier, le système étant agencé pour que le premier moyen électronique (20) transmette une première commande d'exécution de la deuxième fonction en effectuant, avec les données dudit au moins un capteur (19), une identification de la présence ou de l'absence de ladite matière et en n'activant pas la deuxième fonction s'il identifie l'absence de ladite matière, le système étant **caractérisé en ce qu'**il est agencé pour que, le premier moyen électronique (20), après avoir identifié la présence de ladite matière, vérifie, avec les données dudit au moins un capteur (19), que la quantité de ladite matière présente sur la surface extérieure de la vitre (2) n'est pas trop importante pour l'exécution de la deuxième fonction par le dispositif de nettoyage (1), et n'active pas la deuxième fonction si la quantité de ladite matière est supérieure à une valeur seuil prédéterminée.

2. Système selon la revendication précédente, comprenant en outre un deuxième moyen électronique (17) connecté au premier moyen électronique (20) et agencé pour communiquer avec un terminal portable (18), de manière à recevoir des commandes d'un utilisateur situé à distance du véhicule, et à transmettre des informations audit utilisateur.

3. Système selon la revendication précédente, agencé pour transmettre au terminal portable (18) un message informant de l'absence de ladite matière lorsque le premier moyen électronique (20) a identifié l'absence de ladite matière.

4. Système selon la revendication précédente, agencé pour activer la deuxième fonction lorsqu'il reçoit une deuxième commande d'exécution, venant notamment de l'utilisateur, après avoir envoyé le message informant de l'absence de ladite matière.

5. Système selon l'une des revendications précédentes, dans lequel ledit au moins un capteur (19) est une caméra placée à l'intérieur du véhicule, dont le champ de vision traverse au moins une partie de la vitre (2).

6. Système selon l'une des revendications précédentes, dans lequel ledit au moins un capteur (19) et le premier moyen électronique (20) sont agencés pour fournir une évaluation quantitative de ladite matière déposée sur la surface extérieure de la vitre (2).

7. Système selon la revendication précédente, pour lequel ladite matière est du givre ou de la neige, dans lequel ledit au moins un capteur (19) et le premier moyen électronique (20) sont agencés pour évaluer une estimation de l'épaisseur de givre ou de neige, par exemple en effectuant une mesure d'opacité au travers de la vitre (2).

8. Système selon la revendication précédente, agencé pour piloter le dispositif de nettoyage (1) en utilisant l'estimation de l'épaisseur de givre ou de neige pour adapter des paramètres de fonctionnement de la deuxième fonction.

9. Ensemble comportant un système selon l'une des revendications précédentes, et un dispositif de nettoyage (1) d'une vitre (2) de véhicule agencé pour effectuer une première fonction de nettoyage, adaptée par exemple à un nettoyage standard de poussière, et au moins une deuxième fonction de nettoyage, visant à débarrasser la vitre (2) d'une matière déterminée, notamment du givre de la neige ou des insectes, adhérant à la surface extérieure de ladite vitre.

10. Ensemble selon la revendication précédente, dans lequel le dispositif de nettoyage (1) comprend des moyens spécifiques (12), utilisant par exemple un liquide, agencés pour être activés par la deuxième fonction et ne pas être activés par la première fonction.

11. Procédé de pilotage d'un dispositif (1) de nettoyage d'une vitre (2) de véhicule, ledit dispositif (1) étant agencé pour effectuer une première fonction de nettoyage, adaptée par exemple à un nettoyage standard de poussière, et au moins une deuxième fonction de nettoyage, visant à débarrasser la vitre (2) d'une matière déterminée, notamment du givre de la neige ou des insectes, adhérant à la surface extérieure de ladite vitre, **caractérisé en ce qu'**il comprend, après une première commande envoyée par un utilisateur pour exécuter ladite deuxième fonction:
- une première étape (101), d'acquisition, comprenant au moins une prise d'information de présence de ladite matière sur au moins une partie de la surface extérieure de la vitre (2) ;
- une deuxième étape (102), de contrôle, dans laquelle l'information de la première étape (101) est utilisée pour identifier la présence ou l'absence de ladite matière sur la surface extérieure de la vitre (2) et dont un résultat est de ne pas activer la deuxième fonction si l'absence de ladite matière est identifiée ;
- lorsque la présence de ladite matière a été identifiée, le procédé comprend une quatrième étape (104) dans laquelle une analyse complémentaire de la quantité de matière présente sur la surface extérieure de la vitre (2) a lieue, pour déterminer si la quantité de ladite matière présente sur la surface extérieure de la vitre (2) n'est pas trop importante pour l'exécution de la deuxième fonction par le dispositif de nettoyage (1) et qui n'active pas la deuxième fonction si la quantité de ladite matière est supérieure à une valeur seuil prédéterminée.

12. Procédé selon la revendication précédente, comprenant en outre une troisième étape (103) dans laquelle l'information de l'absence de ladite matière est communiquée à l'utilisateur lorsque la deuxième fonction n'est pas activée à la fin de la deuxième étape (102), et dans laquelle la deuxième fonction est lancée si une deuxième commande est envoyée par l'utilisateur pour exécuter ladite deuxième fonction.

13. Procédé selon la revendication 11, dans lequel la quatrième étape (104) fournit une estimation de la quantité de ladite matière et comprenant une cinquième étape (105) dans laquelle cette information est communiquée à l'utilisateur.

## Patentansprüche

1. System zur Steuerung einer Vorrichtung (1) zur Reinigung eines Fensters (2) eines Fahrzeugs, wobei die Vorrichtung (1) dafür ausgelegt ist, eine erste Reinigungsfunktion auszuführen, die zum Beispiel für eine standardmäßige Reinigung von Staub geeignet ist, und wenigstens eine zweite Reinigungsfunktion, welche bezweckt, das Fenster (2) von einem bestimmten Material zu befreien, das an der Außenfläche des Fensters haftet, insbesondere von Reif, von Schnee oder von Insekten, umfassend wenigstens einen Sensor (19), der dafür ausgelegt ist, eine Information über das Vorhandensein des Materials auf wenigstens einem Teil der Außenfläche des Fensters (2) zu liefern, und ein erstes elektronisches Mittel (20), das dafür ausgelegt ist, Befehle zur Ausführung der Funktionen der Reinigungsvorrichtung (1) zu übertragen und mit dieser Letzteren zu kommunizieren, wobei das System dafür ausgelegt ist, dass das erste elektronische Mittel (20) einen ersten Befehl zur Ausführung der zweiten Funktion überträgt, indem es mit den Daten des wenigstens einen Sensors (19) eine Identifizierung des Vorhandenseins oder des Nichtvorhandenseins des Materials durchführt und die zweite Funktion nicht aktiviert, falls es das Nichtvorhandensein des Materials identifiziert, wobei das System **dadurch gekennzeichnet ist, dass** es dafür ausgelegt ist, dass das erste elektronische Mittel (20), nachdem es das Vorhandensein des Materials identifiziert hat, mit den Daten des wenigstens einen Sensors (19) überprüft, ob die auf der Außenfläche des Fensters (2) vorhandene Menge des Materials nicht zu groß für die Ausführung der zweiten Funktion durch die Reinigungsvorrichtung (1) ist, und die zweite Funktion nicht aktiviert, falls die Menge des Material größer als ein vorbestimmter Schwellenwert ist.

2. System nach dem vorhergehenden Anspruch, welches außerdem ein zweites elektronisches Mittel (17) umfasst, das mit dem ersten elektronischen Mittel (20) verbunden ist und dafür ausgelegt ist, mit einem tragbaren Endgerät (18) zu kommunizieren, um Befehle eines Benutzers zu empfangen, der sich in einer Entfernung vom Fahrzeug befindet, und Informationen an den Benutzer zu übertragen.

3. System nach dem vorhergehenden Anspruch, welches dafür ausgelegt ist, an das tragbare Endgerät (18) eine Nachricht zu übertragen, die über das Nichtvorhandensein des Materials informiert, wenn das erste elektronische Mittel (20) das Nichtvorhandensein des Materials identifiziert hat.

4. System nach dem vorhergehenden Anspruch, welches dafür ausgelegt ist, die zweite Funktion zu aktivieren, wenn es einen zweiten, insbesondere vom Benutzer kommenden Befehl zur Ausführung empfängt, nachdem es die Nachricht gesendet hat, die über das Nichtvorhandensein des Materials informiert.

5. System nach einem der vorhergehenden Ansprüche, wobei der wenigstens eine Sensor (19) eine im Inneren des Fahrzeugs angeordnete Kamera ist, deren Sichtfeld wenigstens einen Teil des Fensters (2) durchquert.

6. System nach einem der vorhergehenden Ansprüche, wobei der wenigstens eine Sensor (19) und das erste elektronische Mittel (20) dafür ausgelegt sind, eine quantitative Bewertung des auf der Außenfläche des Fensters (2) abgelagerten Materials zu liefern.

7. System nach dem vorhergehenden Anspruch, wobei das Material Reif oder Schnee ist, wobei der wenigstens eine Sensor (19) und das erste elektronische Mittel (20) dafür ausgelegt sind, eine Schätzung der Dicke des Reifs oder des Schnees vorzunehmen, zum Beispiel durch Durchführen einer Messung der Lichtundurchlässigkeit durch das Fenster (2) hindurch.

8. System nach dem vorhergehenden Anspruch, welches dafür ausgelegt ist, die Reinigungsvorrichtung (1) unter Verwendung der Schätzung der Dicke von Reif oder Schnee zu steuern, um Funktionsparameter der zweiten Funktion anzupassen.

9. Anordnung, umfassend ein System nach einem der vorhergehenden Ansprüche und eine Vorrichtung zur Reinigung (1) eines Fensters (2) eines Fahrzeugs, die dafür ausgelegt ist, eine erste Reinigungsfunktion auszuführen, die zum Beispiel für eine standardmäßige Reinigung von Staub geeignet ist, und wenigstens eine zweite Reinigungsfunktion, welche bezweckt, das Fenster (2) von einem bestimmten Material zu befreien, das an der Außenfläche des Fensters haftet, insbesondere von Reif, von Schnee oder von Insekten.

10. Anordnung nach dem vorhergehenden Anspruch, wobei die Reinigungsvorrichtung (1) spezielle Mittel (12) umfasst, die zum Beispiel eine Flüssigkeit verwenden und dafür ausgelegt sind, von der zweiten Funktion aktiviert zu werden und von der ersten Funktion nicht aktiviert zu werden.

11. Verfahren zur Steuerung einer Vorrichtung (1) zur Reinigung eines Fensters (2) eines Fahrzeugs, wobei die Vorrichtung (1) dafür ausgelegt ist, eine erste Reinigungsfunktion auszuführen, die zum Beispiel für eine standardmäßige Reinigung von Staub geeignet ist, und wenigstens eine zweite Reinigungsfunktion, welche bezweckt, das Fenster (2) von einem bestimmten Material zu befreien, das an der Außenfläche des Fensters haftet, insbesondere von Reif, von Schnee oder von Insekten, **dadurch gekennzeichnet, dass** es nach einem von einem Benutzer gesendeten ersten Befehl zum Ausführen der zweiten Funktion umfasst:
- einen ersten Schritt (101) der Erfassung, welcher wenigstens eine Aufnahme einer Information über das Vorhandensein des Materials auf wenigstens einem Teil der Außenfläche des Fensters (2) umfasst,
- einen zweiten Schritt (102) der Kontrolle, in welchem die Information aus dem ersten Schritt (101) verwendet wird, um das Vorhandensein oder das Nichtvorhandensein des Materials auf der Außenfläche des Fensters (2) zu identifizieren, und bei dem ein Ergebnis darin besteht, die zweite Funktion nicht zu aktivieren, falls das Nichtvorhandensein des Materials identifiziert wird;
- wobei, wenn das Vorhandensein des Materials identifiziert worden ist, das Verfahren einen vierten Schritt (104) umfasst, in welchem eine zusätzliche Analyse der auf der Außenfläche des Fensters (2) vorhandenen Menge an Material stattfindet, um zu bestimmen, ob die auf der Außenfläche des Fensters (2) vorhandenen Menge des Materials nicht zu groß für die Ausführung der zweiten Funktion durch die Reinigungsvorrichtung (1) ist, und der die zweite Funktion nicht aktiviert, falls die Menge des Material größer als ein vorbestimmter Schwellenwert ist.

12. Verfahren nach dem vorhergehenden Anspruch, welches außerdem einen dritten Schritt (103) umfasst, in welchem die Information über das Nichtvorhandensein des Materials an den Benutzer übermittelt wird, wenn die zweite Funktion nicht am Ende des zweiten Schrittes (102) aktiviert wird, und wobei die zweite Funktion eingeleitet wird, falls von dem Benutzer ein zweiter Befehl zum Ausführen der zweiten Funktion gesendet wird.

13. Verfahren nach Anspruch 11, wobei der vierte Schritt (104) eine Schätzung der Menge des Materials liefert, und welches einen fünften Schritt (105) umfasst, in welchem diese Information an den Benutzer übermittelt wird.

## Claims

1. A system for controlling a device (1) for cleaning a vehicle window (2), said device (1) being arranged to perform a first cleaning function, suitable for example for a standard cleaning of dust, and at least one second cleaning function, intended for clearing the window (2) of a determined material, in particular ice, snow or insects, adhering to the outer surface of said window, comprising at least one sensor (19) arranged to provide information on the presence of said material on at least one portion of the outer surface of the window (2) and a first electronic means (20) arranged to transmit commands for executing functions of the cleaning device (1) and communicating with the latter, the system being arranged so that the first electronic means (20) transmits a first command for executing the second function by performing, with the data of said at least one sensor (19), an identification of the presence or of the absence of said material and not activating the second function if it identifies the absence of said material, the system being **characterized in that** it is arranged so that, the first electronic means (20), after having identified the presence of said material, checks, with the data of said at least one sensor (19), that the quantity of said material present on the outer surface of the window (2) is not too great for the execution of the second function by the cleaning device (1), and does not activate the second function if the quantity of said material is greater than a predetermined threshold value.

2. The system as claimed in the preceding claim, further comprising a second electronic means (17) connected to the first electronic means (20) and arranged to communicate with a portable terminal (18), so as to receive commands from a user situated at a distance from the vehicle, and to transmit information to said user.

3. The system as claimed in the preceding claim, arranged to transmit to the portable terminal (18) a message informing on the absence of said material when the first electronic means (20) has identified the absence of said material.

4. The system as claimed in the preceding claim, arranged to activate the second function when it receives a second execution command, coming in particular from the user, after having sent the message informing on the absence of said material.

5. The system as claimed in one of the preceding claims, in which said at least one sensor (19) is a camera placed inside the vehicle, whose field of view covers at least a portion of the window (2).

6. The system as claimed in one of the preceding claims, in which said at least one sensor (19) and the first electronic means (20) are arranged to provide a quantitative assessment of said material deposited on the outer surface of the window (2).

7. The system as claimed in the preceding claim, for which said material is ice or snow, in which said at least one sensor (19) and the first electronic means (20) are arranged to assess an estimation of the thickness of ice or of snow, for example by performing a measurement of opacity through the window (2).

8. The system as claimed in the preceding claim, arranged to control the cleaning device (1) by using the estimation of the thickness of ice or of snow to adapt operating parameters of the second function.

9. An assembly comprising a system as claimed in one of the preceding claims, and a device (1) for cleaning a vehicle window (2) arranged to perform a first cleaning function, suitable for example for a standard cleaning of dust, and at least one second cleaning function, intended for clearing the window (2) of a determined material, in particular ice, snow or insects, adhering to the outer surface of said window.

10. The assembly as claimed in the preceding claim, in which the cleaning device (1) comprises specific means (12), using a liquid for example, arranged to be activated by the second function and not activated by the first function.

11. A method for controlling a device (1) for cleaning a vehicle window (2), said device (1) being arranged to perform a first cleaning function, suitable for example for a standard cleaning of dust, and at least one second cleaning function, intended for clearing the window (2) of a determined material, in particular ice, snow or insects, adhering to the outer surface of said window, **characterized in that** it comprises, after a first command sent by a user to execute said second function:
- a first step (101), of acquisition, comprising at least one taking of information on presence of said material on at least a portion of the outer surface of the window (2);
- a second step (102), of checking, in which the information from the first step (101) is used to identify the presence or the absence of said material on the outer surface of the window (2) and a result of which is to not activate the second function if the absence of said material is identified ;
- when the presence of said material has been identified, the method comprises a fourth step (104) in which an additional analysis of the quantity of material present on the outer surface of the window (2) occurred, to determine whether the quantity of said material present on the outer surface of the window (2) is not too great for the execution of the second function by the cleaning device (1) and which does not activate the second function if the quantity of said material is greater than a predetermined threshold value.

12. The method as claimed in the preceding claim, further comprising a third step (103) in which the information on the absence of said material is communicated to the user when the second function is not activated at the end of the second step (102), and in which the second function is launched if a second command is sent by the user to execute said second function.

13. The method as claimed in claim 11, in which the fourth step (104) provides an estimation of the quantity of said material, and comprising a fifth step (105) in which this information is communicated to the user.
